# EUROPEAN PATENT SPECIFICATION

(11) **EP 3 501 727 B1**
(45) Date of publication and mention of the grant of the patent: **03.02.2021**
(21) Application number: 17210005.9
(22) Date of filing: 22.12.2017
(51) Int. Cl.: B23K 35/02, C23C 28/00, F01D 5/00, B22D 19/04, B23K 1/00, C04B 35/10, C04B 35/106, C04B 35/48, C04B 35/622, C04B 37/02, F01D 5/08, F01D 5/14, F01D 5/18, F01D 5/28

(54) **THERMAL PROTECTION METHOD FOR GAS TURBINE COMPONENTS**
WÄRMESCHUTZVERFAHREN FÜR GASTURBINENKOMPONENTEN
PROCÉDÉ DE PROTECTION THERMIQUE POUR COMPOSANTS DE TURBINE À GAZ

(43) Date of publication of application: 26.06.2019
(73) Proprietor: Ansaldo Energia IP UK Limited, London W1G 9DQ (GB)
(72) Inventor: BOSSMANN, Hans-Peter, 79787 LAUCHRINGEN (DE); KRÜCKELS, Jörg, 5413 BIRMENSTORF (CH); BRANDL, Herbert, 79761 WALDSHUT (DE); BOGDANIC, Laura, 5430 WETTINGEN (CH); KOEHNKE, Rene, 8166 Niederweningen (CH)
(74) Representative: Cernuzzi, Daniele

(56) References cited:
- EP-A1- 2 769 969
- EP-A1- 2 851 514
- WO-A1-2013/144035
- WO-A2-2014/193512
- US-A1- 2008 307 793

## Description

### FIELD OF THE INVENTION

The present invention relates to a thermal protection method for gas turbine components.

### DESCRIPTION OF PRIOR ART

In the gas turbine field, it is well known the need for an effective thermal protection of components/surfaces operating at very high temperatures and also exposed to particularly aggressive environments, which subjects the components to high levels of stress, not only thermal but also corrosive and mechanical.

There is therefore a strong need for high-temperature highly effective thermal protection systems (TPS).

The main kinds of TPS currently available for thermal protection of gas turbine components are:
1) TBC (Thermal Barrier Coatings): the surfaces of gas turbine components (made of specially designed metal alloys such as so-called superalloys) are protected by thermal barrier coatings which insulate components by means of thermally insulating materials, capable to sustain a significant temperature difference between the load-bearing metal surface and the coating surface;
2) Mechanically fixed ceramic tiles: covering tiles, made of ceramic materials having low thermal conductivity, are mechanically fixed (e.g. clamped or bolted) on component surfaces to be protected;
3) Brazed ceramic tiles: covering tiles, made of ceramic materials, are brazed on the metallic substrate defined by the component part to be protected; adhesion between tile and substrate is ensured by the brazed interface.

EP2769969A1 discloses a thermal protection system for gas turbine components comprising a metallic gas turbine component covered and permanently joined with one or more ceramic tiles. The ceramic tiles are placed in a mould and liquid metal is poured in the mould to make the metal component and at the same time mechanically anchor the tiles to the component.

WO2013/144035A1 discloses a method for processing a modular hybrid component comprising parts made of different materials, having different electromagnetic and/or thermal properties; the modular hybrid component is exposed to an alternating electromagnetic field, whereby both parts are heated up differently, and a brazing or soldering joint or field sensitive mineral cement between the parts is affected by said heating action.

Currently available TPS still have room for improvements, in particular in order to increase mechanical resistance, increase operation temperatures and reduce thermal conductivity, thus also reducing cooling air consumption, and extend expected lifetime.

For example, TBC involve limitations on the operation maximum temperature as well as on thickness, thus impacting also on cooling air reduction.

Mechanically fixed ceramic tiles can be affected by failures resulting in high risks of overheating and detachments; moreover, relatively wide gaps are needed between tiles for expansion, which must be purged by additional cooling air.

High temperature TPS based on brazing ceramic on metal surfaces of gas turbine components (such as gas turbine combustors or turbine parts) poses specific problems.

In fact, brazing of ceramic materials suitable for usual gas turbine operation conditions is not fully satisfactory. Metal and ceramic materials feature significantly different thermal expansion coefficient, thus resulting in shear stress at the metal-ceramic interface and tensile stress within the ceramic material in the region close to the interface, at least under some load conditions.

Generally speaking, joining a ceramic material to metal material usually results in stresses and in many cases to failure of the ceramic part or the joint.

### DISCLOSURE OF THE INVENTION

Accordingly, it is an object of the present invention to provide a thermal protection method for gas turbine components suitable for overcoming the problem foregoing described of the prior art.

In particular, it is an object of the present invention to provide a thermal protection method which is specifically and fully suitable to be used in thermal protection of gas turbine components.

The present invention accordingly relates to a thermal protection method for thermally protecting gas turbine components as defined in Claim 1.

Advantageous preferred features of the invention are the subject matter of the dependent claims.

Basically, the invention provides an improved thermal protection method based on the brazing-in or casting-in of high temperature resistant ceramic components in metallic walls of gas turbine components.

According to the invention, high temperature resistant ceramic elements, for example in the form of tiles (but also differently shaped), are specifically designed to comprise at least a root portion configured to match a respective seat formed in the metallic wall of the gas turbine component to be thermally protected.

The ceramic element is joined to the metallic wall by brazing the root portion of the ceramic element directly in the seat, with interposition of a braze paste or another braze material; or by directly casting-in the root portion of the ceramic element inside the seat, with interposition of an interface material such as a metal powder or a conductive cement; or by cementing-in (i.e. gluing or fixing) the root portion of the ceramic element inside the seat by means (and with interposition) of a ceramic adhesive paste or another suitable adhesive material.

In other words, the ceramic element, made of a high temperature resistant ceramic material, is not merely applied onto a surface of the metal component to protect, but it is joined to the metallic wall by firmly joining the root portion of the ceramic element directly in the seat formed in the metal component, with interposition of an interface material.

In particular, the ceramic element is directly brazed-in or cast-in or cemented-in (by means of the root portion thereof) in the wall of the metal component, so as to be firmly and effectively fitted to the metallic component to protect.

The invention thus provides an improved thermal protection method for gas turbine components.

Since the ceramic element is directly brazed-in or cast-in or cemented-in on the wall of the metal component, the invention reduces the shear and tensile stress.

The ceramic element has in fact a coefficient of thermal expansion (CTE) lower than that of the metal component to protect and into which the ceramic element is brazed-in or cast-in or cemented-in.

The ceramic element is substantially stress-free at the melting temperature.

When the metal-ceramic assembly is cooled, cooling results in compressive stress conditions of the ceramic material (due to its lower CTE with respect to the surrounding metal material), thus forming a firm and reliable metal-ceramic joint.

Also in use, i.e. during normal operation of the gas turbine, the ceramic material of the protective element and the metal material of the metal component maintain different thermal expansion coefficients, again contributing to the effectiveness of the joint without originating dangerous stress conditions at the interface between the ceramic element and the metal component wall.

The invention thus eliminates stress level and especially tensile stress of the ceramic material, both during manufacturing and in use, under normal operation condition of the gas turbine.

The invention proves to be fully effective and advantageous over known solutions.

For example, the invention achieves an increase of temperature capability up to more than 300K and a heat flux reduction of more than 50% with respect to traditional TBC, thus also allowing a significant reduction in cooling air consumption.

With respect to traditionally fitted tiles, the invention is not only more versatile, being suitable to protect different gas turbine components, such as vanes and blades, but it also reduces significantly the risk of damages in case of failure of some ceramic elements.

When compared with traditionally brazed tiles, the invention achieves a significantly increased reliability, due to the firm and safe joining of the ceramic element to the metallic wall.

### BRIEF DESCRIPTION OF DRAWINGS

The invention is further described by way of example in the following non-limiting embodiments, with reference to the accompanying drawings in which:
- Figure 1 is a partial, exploded view of a gas turbine with components provided with a thermal protection system according to the invention;
- Figure 2 is an enlarged view in longitudinal section of a detail of the thermal protection system of Figure 1;
- Figure 3 is a partial cross-sectional view of the detail in Figure 2;
- Figures 4A, 4B, 4C are views in longitudinal section of respective ceramic elements used in different embodiments of the thermal protection system according to the invention;
- Figures 5A, 5B are a longitudinal section view and a plan view respectively of a ceramic element used in a further embodiment of the thermal protection system of the invention.

### DETAILED DESCRIPTION OF PREFERRED EMBODIMENTS OF THE INVENTION

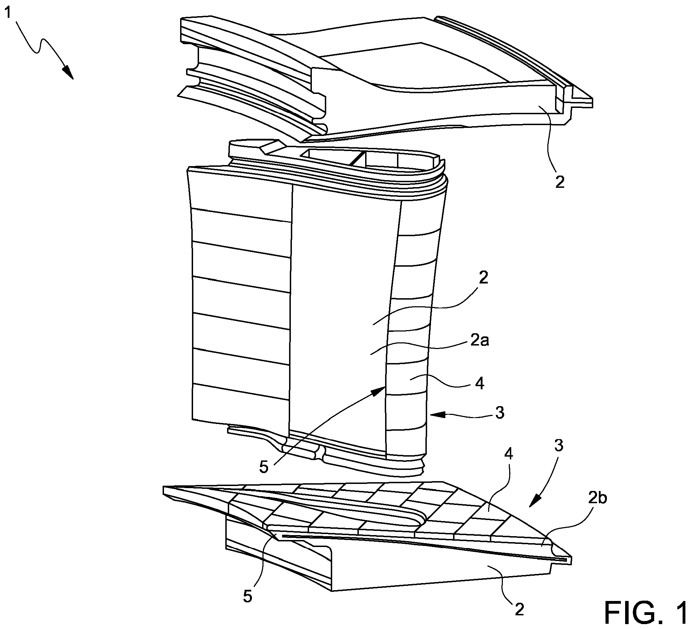

With reference to Figure 1, a gas turbine 1 (not shown in its entirety) has at least one component 2 provided with a thermal protection system 3.

For example, the component 2 is a blade 2a or a blade support portion 2b. It is however understood that other components 2 of the gas turbine 1 may require thermal protection and can be accordingly provided with the thermal protection system 3 of the invention.

The thermal protection system 3 comprises a high temperature resistant ceramic element 4 which is coupled to a metallic wall 5 of the component 2.

The component 2, or at least the wall 5, is made of a metal material.

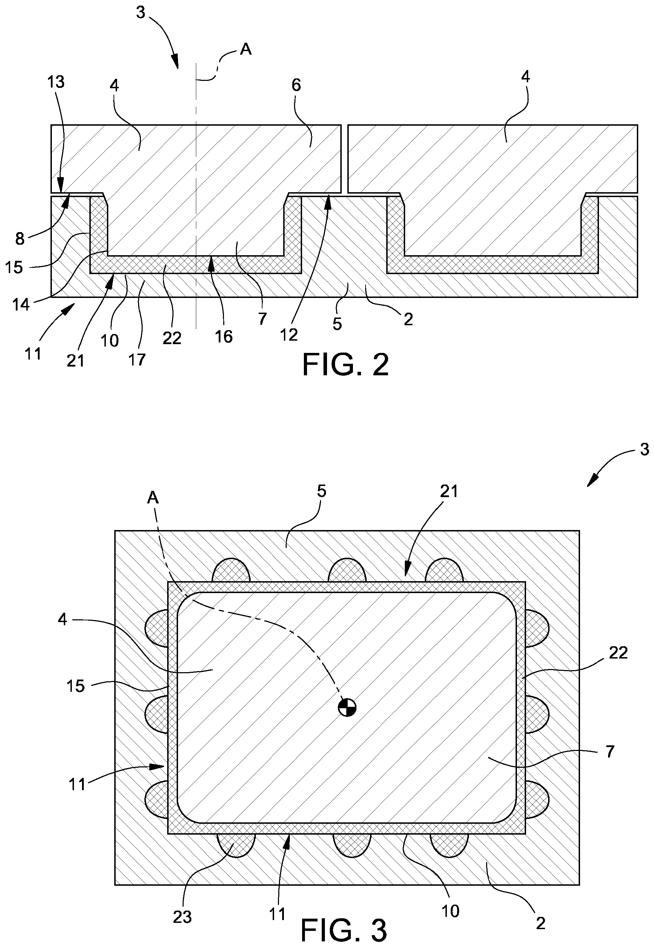

With reference also to Figures 2 and 3, the ceramic element 4, for example having the form of a covering tile, comprises a main body 6 and a root portion 7 projecting from a bottom face 8 of the main body 6.

Preferably, the ceramic element 4 is a monolithic piece formed by the main body 6 and the root portion 7 and made of a ceramic material.

In particular, the ceramic element 4 is made of a high temperature resistant ceramic material.

For example, the ceramic element 4 can be made of an oxide or non-oxide ceramic, for example an alumina or zirconia based ceramic, possibly strengthened or stabilized to increase mechanical integrity and phase stability.

The ceramic element 4 can be made of a monolithic ceramic, a composite ceramic (such as particle strengthened ceramics, e.g. zirconia toughened alumina), a ceramic fiber strengthened ceramic (e.g. a ceramic matrix composite) or combination thereof.

The conductivity of the ceramic element 4 can be adjusted, either as a whole or locally (i.e. in specific regions), by selecting the porosity of the ceramic material thereof.

The ceramic element 4 can be manufactured by any standard process or by additive manufacturing, e.g. by a lithography-based ceramic manufacturing process.

The main body 6 of the ceramic element 4 can have different shape, sizes and thickness, also depending on the shape of the component 2 to protect.

Also the root portion 7 of the ceramic element 4 can be variously shaped.

In any case, the root portion 7 is shaped and dimensioned so as to match and engage a hollow seat 10 formed in the wall 5 of the component 2 thus defining a shape-coupling 11; in other words, the root portion 7 and the wall 5 of the component 2 are mechanically interlocked.

The root portion 7 extends along an axis A which is for example substantially perpendicular to the face 8 of the main body 6. Around the root portion 7, the face 8 of the ceramic element 4 defines a contact surface 12 contacting a mating surface 13, surrounding the seat 10, of the component 2.

The root portion 7 has a lateral surface 14, departing from the face 8 of the main body 6 and facing a lateral surface 15 of the seat 10, and a bottom end surface 16, for example substantially flat and perpendicular to the axis A and facing a corresponding bottom surface 17 of the seat 10.

In the embodiment of Figures 2-3, the root portion 7 and the seat 10 are both substantially prismatic and have a substantially polygonal cross-section (for example, but not necessarily, a rectangular or square cross-section); and have respective substantially flat sides facing each other and parallel to one another and to the axis A.

According to the invention, the root portion 7 of the ceramic element 4 is a brazed-in or cast-in or cemented-in ceramic portion, which is directly brazed or cast or cemented in the seat 10 during manufacturing of the component 2.

Thus, the ceramic element 4 is joined to the metallic wall 5 (i.e. to the component 2) not only by the shape-coupling 11 (i.e. by mechanical interlocking), but also by a brazed or cast or cemented joint 21, formed by brazing the root portion 7 of the ceramic element 4 directly in the seat 10 of the wall 5 of the component 2, with interposition of an adhesion layer 22 made of an interface material, i.e. a braze material; or by directly casting the root portion 7 inside the seat 10, optionally with interposition of an adhesion layer 22 made of an interface material such as a metal powder or a conductive cement; or by cementing-in (i.e. gluing or fixing) the root portion of the ceramic element inside the seat by means of an adhesion layer 22 made of an adhesive material, such as a ceramic adhesive paste, interposed between the root portion 7 and the seat 10 of the wall 5.

In other words, the ceramic element 4, made of a high temperature resistant ceramic material, is not merely applied onto the surface 13 of the metal component 2 to protect, but it comprises a brazed-in or cast-in or cemented-in root portion 7 which engages the seat 10 and is fitted to the wall 5 of the metal component 2, being directly brazed or cast or cemented inside the seat 10.

Preferably, as shown in Figure 3, the seat 10 is provided with recesses 23 formed in the wall 5 to receive excess interface material (e.g. braze material or adhesive material) or cast material during the manufacturing process.

For example, a plurality of recesses 23, such as grooves or cavities, are formed in the lateral surface 15 of the seat 10, spaced from one another on the lateral surface 15 and extending substantially parallel to the axis A.

The ceramic element 4 and specifically the root portion 7, as well as the wall 5 and specifically the seat 10, can be variously shaped in order to improve the mechanical interlocking between the root portion 7 and the seat and thus between the ceramic element 4 and the component 2.

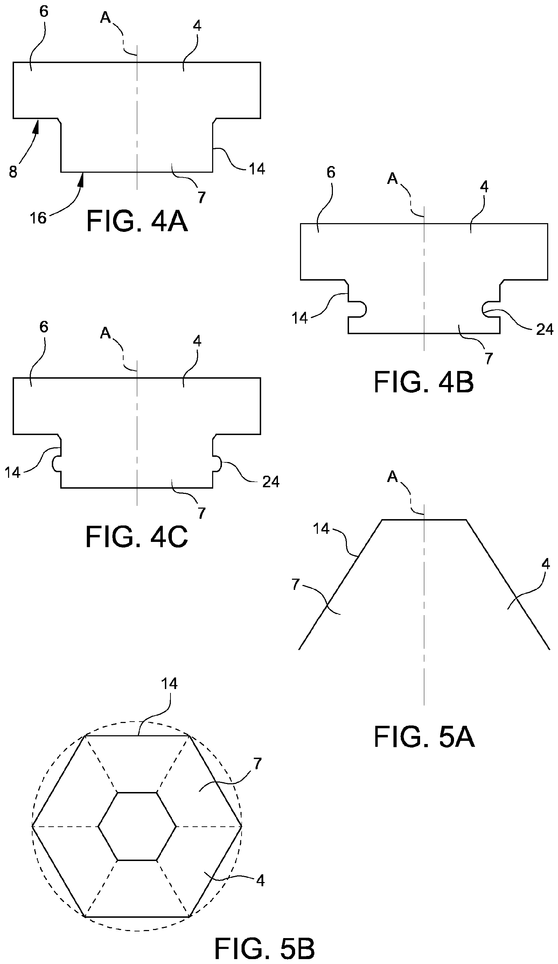

Differently shaped root portions 7 are shown, for example, in Figures 4A, 4B, 4C and Figures 5A, 5B.

In particular, in the embodiments of Figures 4B, 4C the root portion 7 and the seat 10 (not shown) have respective additional anchoring features 24, engaging with each other to increase the mechanical interlocking between the ceramic element 4 and the component 2.

For example, in the embodiment of Figure 4B, the anchoring features 24 are defined by one or more grooves formed in the lateral surface 14 of the root portion 7 and substantially crosswise (e.g. perpendicular) to the axis A, and which engage respective ridges (not shown) projecting from the lateral surface 15 of the seat 10.

In the embodiment of Figure 4C, the anchoring features 24 are defined by radially projecting ridges, extending from the lateral surface 14 of the root portion 7 and substantially perpendicular to the axis A, and which engage respective grooves (not shown) formed in the lateral surface 15 of the seat 10.

For example, the anchoring features 24 run along the lateral surfaces 14, 15 about the axis A, having a continuous annular configuration or comprising discontinuous, possibly staggered cavities.

In other embodiments, such as that shown in Figures 5A, 5B, the root portion 7 is generally tapered, the lateral surface 14 comprising at least a tapered portion; in particular, the root portion 7 is shaped as a truncated pyramid, having a polygonal cross-section, or has a substantially frusto-conical shape, with a rounded (e.g. circular) cross-section.

For example, in the embodiment of Figures 5A, 5B, the root portion 7 has an hexagonal cross-section and is tapered as a truncated pyramid.

The thermal protection system 3 is manufactured by implementing the thermal protection method of the invention, according to claim 1, which comprises the following steps:
- providing the component 2 of the gas turbine 1 with the seat 10, formed in the wall 5 of the component 2 and so shaped as to match with the root portion 7 of the ceramic element 4;
- brazing or casting or cementing the ceramic element 4 and specifically the root portion 7 in the seat 10, optionally with interposition of the adhesion layer 22 made of the interface material (braze material, if the root portion 7 is brazed in the seat 10; or metal powder or conductive cement, if the root portion 7 is cast inside the seat 10; or adhesive material, if the root portion 7 is cemented, glued, etc. in the seat 10).

Finally, although the invention has been explained in relation to the above-mentioned preferred embodiments, it is to be understood that many other possible modifications and variations can be made without departing from the scope of the appended claims.

## Claims

1. A thermal protection method for thermally protecting gas turbine components, comprising the steps of:
- providing a component (2) of a gas turbine (1) with a hollow seat (10), formed in a wall (5) of the component (2); said component (2), or at least said wall (5), being made of a metal material;
- providing a ceramic element (4) comprising at least a root portion (7) extending substantially along an axis (A) and matching with said seat (10); said ceramic element (4) and the root portion (7) thereof being made of a high temperature resistant ceramic material;
wherein the root portion (7) is a brazed-in or cast-in or cemented-in root portion (7) which is brazed or cast or cemented directly inside the seat (10) so that the root portion (7) and the wall (5) of the component (2) are mechanically interlocked and also connected by a brazed or cast or cemented joint (21).

2. The method according to Claim 1, wherein the ceramic element (4) is joined to the metallic wall (5) of the component (2) by a shape-coupling (11) defining a mechanical interlocking, and also by brazing the root portion (7) of the ceramic element (4) directly in the seat (10) of the wall (5) of the component (2), with interposition of an adhesion layer (22) made of an interface material consisting of a braze material; or by directly casting the root portion (7) inside the seat (10), optionally with interposition of an adhesion layer (22) made of an interface material such as a metal powder or a conductive cement; or by cementing-in the root portion (7) inside the seat (10) by means of an adhesive material, interposed between the root portion (7) and the seat (10).

3. The method according to Claim 2, comprising a step of positioning an adhesion layer (22), made of an interface material, in the seat (10) between respective lateral surfaces (14, 15) of the root portion (7) of the ceramic element (4) and of the seat (10) of the component (2).

4. The method according to Claim 3, wherein the interface material is a braze material, if the root portion (7) is brazed-in; or cast material or a metal powder or a conductive cement, if the root portion (7) is cast-in; or an adhesive material, if the root portion (7) is cemented-in.

5. The method according to any one of the preceding Claims, comprising a step of providing the seat (10) with recesses (23) formed in the wall (5) to receive excess interface material or cast material.

6. The method according to any one of the preceding Claims, comprising a step of providing the root portion (7) and the seat (10) with respective additional anchoring features (24), engaging with each other to increase the mechanical interlocking between the ceramic element (4) and the component (2).

7. The method according to Claim 6, wherein the anchoring features (24) run along respective lateral surfaces (14, 15) of the root portion (7) and the seat (10) about the axis (A), and preferably have a continuous annular configuration; the anchoring features (24) comprising one or more grooves, substantially crosswise to the axis (A) and formed in a lateral surface (14) of the root portion (7) and engaging respective ridges projecting from a lateral surface (15) of the seat (10), or vice versa.

8. The method according to any one of the preceding Claims, wherein the root portion (7) is tapered, having a lateral surface (14) comprising at least a tapered portion.

9. The method according to any one of the preceding Claims, wherein the ceramic element (4) is made of a monolithic ceramic, or a composite ceramic such as particle strengthened ceramics, e.g. zirconia toughened alumina, or a ceramic fiber strengthened ceramic, e.g. a ceramic matrix composite, or a combination thereof.

## Patentansprüche

1. Wärmeschutzverfahren zum thermischen Schutz von Gasturbinenbauteilen, das die folgenden Schritte umfasst:
- Versehen eines Bauteils (2) einer Gasturbine (1) mit einem hohlen Sitz (10), der in einer Wand (5) des Bauteils (2) ausgebildet ist; wobei das Bauteil (2) oder wenigstens die Wand (5) aus einem Metallmaterial hergestellt ist;
- Bereitstellen eines Keramikelements (4), das wenigstens einen Fußabschnitt (7) umfasst, der sich im Wesentlichen entlang einer Achse (A) erstreckt und mit dem Sitz (10) zusammenpasst; wobei das Keramikelement (4) und dessen Fußabschnitt (7) aus einem hochtemperaturbeständigen Keramikmaterial hergestellt sind;
wobei der Fußabschnitt (7) ein mittels Hartlöten oder Vergießen oder Verkleben eingesetzter Fußabschnitt (7) ist, der direkt innerhalb des Sitzes (10) mittels Hartlöten oder Vergießen oder Verkleben eingesetzt ist, so dass der Fußabschnitt (7) und die Wand (5) des Bauteils (2) mechanisch verriegelt und auch durch eine hartgelötete oder vergossene oder verklebte Verbindung (21) verbunden sind.

2. Verfahren nach Anspruch 1, wobei das Keramikelement (4) mit der metallischen Wand (5) des Bauteils (2) durch eine Formkopplung (11) verbunden ist, die eine mechanische Verriegelung definiert, und auch durch Hartlöten des Fußabschnitts (7) des Keramikelements (4) direkt in den Sitz (10) der Wand (5) des Bauteils (2) unter Zwischenschaltung einer Haftschicht (22), die aus einem aus einem Hartlotmaterial bestehenden Zwischenschichtmaterial hergestellt ist; oder durch direktes Vergießen des Fußabschnitts (7) innerhalb des Sitzes (10), optional unter Zwischenschaltung einer Haftschicht (22) aus einem Zwischenschichtmaterial wie z.B. einem Metallpulver oder einem leitfähigen Klebstoff; oder durch Einkleben des Fußabschnitts (7) innerhalb des Sitzes (10) mittels eines Klebstoffes, der zwischen dem Fußabschnitt (7) und dem Sitz (10) angeordnet ist.

3. Verfahren nach Anspruch 2, mit einem Schritt des Positionierens einer Haftschicht (22), die aus einem Zwischenschichtmaterial hergestellt ist, in dem Sitz (10) zwischen jeweiligen Seitenflächen (14, 15) des Fußabschnitts (7) des Keramikelements (4) und des Sitzes (10) des Bauteils (2).

4. Verfahren nach Anspruch 3, wobei das Zwischenschichtmaterial ein Hartlötmaterial ist, wenn der Fußabschnitt (7) mittels Hartlöten eingesetzt ist; oder ein Vergussmaterial oder ein Metallpulver oder ein leitfähiger Klebstoff, wenn der Fußabschnitt (7) eingegossen ist; oder ein Klebstoff, wenn der Fußabschnitt (7) eingeklebt ist.

5. Verfahren nach einem der vorangehenden Ansprüche, mit einem Schritt des Versehens des Sitzes (10) mit Aussparungen (23), die in der Wand (5) ausgebildet sind, um überschüssiges Zwischenschichtmaterial oder Vergussmaterial aufzunehmen.

6. Verfahren nach einem der vorangehenden Ansprüche, mit einem Schritt des Versehens des Fußabschnitts (7) und des Sitzes (10) mit jeweiligen zusätzlichen Verankerungsmerkmalen (24), die ineinander greifen, um die mechanische Verriegelung zwischen dem Keramikelement (4) und dem Bauteil (2) zu erhöhen.

7. Verfahren nach Anspruch 6, wobei die Verankerungsmerkmale (24) entlang jeweiliger Seitenflächen (14, 15) des Fußabschnitts (7) und des Sitzes (10) um die Achse (A) verlaufen und vorzugsweise eine durchgehende ringförmige Konfiguration aufweisen; wobei die Verankerungsmerkmale (24) eine oder mehrere Nuten umfassen, die im Wesentlichen quer zur Achse (A) verlaufen und in einer Seitenfläche (14) des Fußabschnitts (7) ausgebildet sind und in jeweilige Rippen eingreifen, die von einer Seitenfläche (15) des Sitzes (10) hervorstehen, oder umgekehrt.

8. Verfahren nach einem der vorangehenden Ansprüche, wobei der Fußabschnitt (7) abgeschrägt ist und eine Seitenfläche (14) mit wenigstens einem abgeschrägten Abschnitt aufweist.

9. Verfahren nach einem der vorangehenden Ansprüche, wobei das Keramikelement (4) aus einer monolithischen Keramik oder einer Verbundkeramik wie partikelverstärkter Keramik, wie z.B. Zirkonoxid-verstärktes Aluminiumoxid, oder aus einer Keramikfaser-verstärkten Keramik, wie z.B. einem Keramikmatrix-Verbundwerkstoff, oder aus einer Kombination davon hergestellt ist.

## Revendications

1. Procédé de protection thermique pour protéger thermiquement des composants de turbine à gaz, comprenant les étapes suivantes :
- fourniture d'un composant (2) d'une turbine à gaz (1) doté d'un siège creux (10), formé dans une paroi (5) du composant (2) ; ledit composant (2), ou au moins ladite paroi (5), étant composé(e) d'un matériau métallique ;
- fourniture d'un élément céramique (4) comprenant au moins une partie de base (7) s'étendant sensiblement le long d'un axe (A) et s'adaptant audit siège (10) ; ledit élément céramique (4) et la partie de base (7) de celui-ci étant composés d'un matériau céramique résistant aux températures élevées ;
dans lequel la partie de base (7) est une partie de base brasée, coulée ou collée (7) laquelle est brasée, coulée ou collée directement à l'intérieur du siège (10) de sorte que la partie de base (7) et la paroi (5) du composant (2) sont interverrouillées mécaniquement et également reliées par une jonction brasée, coulée ou collée (21).

2. Procédé selon la revendication 1, dans lequel l'élément céramique (4) est joint à la paroi métallique (5) du composant (2) par un couplage de formes (11) définissant un interverrouillage mécanique, et également par brasage de la partie de base (7) de l'élément céramique (4) directement dans le siège (10) de la paroi (5) du composant (2), avec interposition d'une couche d'adhérence (22) composée d'un matériau d'interface constitué d'un matériau de brasage ; ou par coulage direct de la partie de base (7) à l'intérieur du siège (10), éventuellement avec interposition d'une couche d'adhérence (22) composée d'un matériau d'interface tel qu'une poudre métallique ou un ciment conducteur ; ou par collage de la partie de base (7) à l'intérieur du siège (10) au moyen d'un matériau adhésif, interposé entre la partie de base (7) et le siège (10).

3. Procédé selon la revendication 2, comprenant une étape de positionnement d'une couche d'adhérence (22), composée d'un matériau d'interface, dans le siège (10) entre les surfaces latérales respectives (14, 15) de la partie de base (7) de l'élément céramique (4) et du siège (10) du composant (2).

4. Procédé selon la revendication 3, dans lequel le matériau d'interface est un matériau de brasage, si la partie de base (7) est brasée ; ou un matériau coulé ou une poudre métallique ou un ciment conducteur, si la partie de base (7) est coulée ; ou un matériau adhésif, si la partie de base (7) est collée.

5. Procédé selon l'une quelconque des revendications précédentes, comprenant une étape consistant à doter le siège (10) d'évidements (23) formés dans la paroi (5) pour recevoir le matériau d'interface ou le matériau coulé excédentaire.

6. Procédé selon l'une quelconque des revendications précédentes, comprenant une étape consistant à doter la partie de base (7) et le siège (10) d'éléments d'ancrage (24) supplémentaires respectifs, se mettant en prise les uns avec les autres pour améliorer l'interverrouillage mécanique entre l'élément céramique (4) et le composant (2).

7. Procédé selon la revendication 6, dans lequel les éléments d'ancrage (24) passent le long de surfaces latérales respectives (14, 15) de la partie de base (7) et du siège (10) autour de l'axe (A), et ont de préférence une configuration annulaire continue ; les éléments d'ancrage (24) comprenant une ou plusieurs creux, sensiblement transversalement à l'axe (A) et formés dans une surface latérale (14) de la partie de base (7) et se mettant en prise avec les saillies respectives faisant saillie à partir d'une surface latérale (15) du siège (10), ou vice versa.

8. Procédé selon l'une quelconque des revendications précédentes, dans lequel la partie de base (7) est conique, ayant une surface latérale (14) comprenant au moins une partie conique.

9. Procédé selon l'une quelconque des revendications précédentes, dans lequel l'élément céramique (4) est composé d'une céramique monolithique, ou d'une céramique composite telle que des céramiques renforcées par des particules, par exemple de l'alumine renforcée par de la zircone, ou une céramique renforcée par de la fibre céramique, par exemple un composite à matrice céramique, ou une combinaison de ceux-ci.
